# EUROPÄISCHE PATENTSCHRIFT

(11) **EP 3 980 306 B1**
(45) Veröffentlichungstag und Bekanntmachung des Hinweises auf die Patenterteilung: **09.08.2023**
(21) Anmeldenummer: 20732147.2
(22) Anmeldetag: 04.06.2020
(51) Int. Cl.: B60T 17/22

(54) **RADDREHZAHLSENSOR FÜR EIN NUTZFAHRZEUG**
WHEEL SPEED SENSOR FOR COMMERCIAL VEHICLE
CAPTEUR DE VITESSE DE VROTATION POUR VÉHICULE UTILITAIRE

(30) Priorität: 06.06.2019 DE 102019115396
(43) Veröffentlichungstag der Anmeldung: 13.04.2022
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); JAWARIKAR, Pravin, 444303 Distr. Buldhana (IN); HAUFF, Michael, 81379 München (DE); WINDISCH, Andreas, 82008 Unterhaching (DE); ROHSE, Tobias, 71701 Schwieberdingen (DE); LECHNER, Klaus, 91362 Pretzfeld (DE)
(86) Internationale Anmeldenummer: PCT/EP2020/065457
(87) Internationale Veröffentlichungsnummer: WO 2020/245256

(56) Entgegenhaltungen:
- CN-A- 104 020 311
- CN-U- 204 154 733
- DE-A1-102017 103 979
- DE-U1- 29 718 791
- US-A1- 2004 189 285

## Beschreibung

Die Erfindung betrifft einen Raddrehzahlsensor für ein Nutzfahrzeug, insbesondere einen Raddrehzahlsensor für ein Nutzfahrzeug, der im Bereich einer Bremse eines Rads an einem Fahrwerk des Nutzfahrzeugs angeordnet ist.

Eine Erfassung von Raddrehzahlen von einzelnen Rädern von Fahrzeugen ist heutzutage erforderlich, um insbesondere eine Funktion von Assistenzsystemen, beispielsweise ABS, ASR oder ESP, zu ermöglichen. Dabei ist eine genaue Erfassung der Raddrehzahl erforderlich, um in Grenzsituationen entsprechende Algorithmen anzusteuern. Um die Raddrehzahlen genau zu erfassen, sind Raddrehzahlsensoren bekannt, die im Bereich eines Rads des Fahrzeugs angeordnet sind, um die Drehzahl möglichst unmittelbar, ohne Abweichungen durch eine mechanische Übertragung, zu erfassen.

Im PKW-Bereich werden vermehrt aktive Raddrehzahlsensoren, also Raddrehzahlsensoren, die durch Anlegen einer Versorgungsspannung aktiviert werden und ein Ausgangssignal erzeugen, eingesetzt. Die aktiven Raddrehzahlsensoren erzeugen bereits im Raddrehzahlsensor Signale, die beispielsweise eine drehzahlunabhängige konstante Amplitude aufweisen. Somit wird bereits im Raddrehzahlsensor ein Datenprotokoll erzeugt, das, beispielsweise über ein Bus-System übertragen, in einem Steuergerät ausgewertet werden kann. Außerdem besteht die Möglichkeit, Diagnosefunktionen zu implementieren.

Im Nutzfahrzeugbereich war ein Einsatz der aktiven Raddrehzahlsensoren und ein Ausnützen ihrer Vorteile bislang nicht möglich, da hier im Bereich des Rades eine thermische Belastung des Sensors größer als im PKW-Bereich ist und insbesondere Chips von Hall-Gebern der thermischen Belastung nicht standhalten.

Im Dokument CN 204154733 U ist ein Raddrehzahlsensor offenbart, der einen aktiven Impulssensor aufweist. Der Impulssensor wird von einem Gehäuse umschlossen, das eine Schutzkappe aufweist die das Gehäuse teilweise abdeckt.

In CN 104020311 A ist ein Sensor offenbart, der in einer Hochtemperaturumgebung einsetzbar ist. Dazu weist der Sensor ein Übergangsrohr auf, in das eine Hauptplatine des Sensors eingebracht ist.

Der Erfindung liegt also die Aufgabe zugrunde, den obigen Nachteil zu beseitigen und einen aktiven Raddrehzahlsensor bereitzustellen, der auch in einem Bereich mit einer höheren thermischen Belastung eingesetzt werden kann.

Die Aufgabe wird durch einen Raddrehzahlsensor gemäß Anspruch 1 gelöst. Vorteilhafte Weiterentwicklungen sind in den abhängigen Ansprüchen enthalten.

Gemäß einem Aspekt der Erfindung weist ein Raddrehzahlsensor für ein Nutzfahrzeug einen aktiven Impulssensor, ein Gehäuse, das ausgebildet ist, den aktiven Impulssensor zumindest teilweise zu umschließen, und eine Schutzkappe, die das Gehäuse zumindest teilweise abdeckt, auf. Der Raddrehzahlsensor weist ferner mindestens ein Bauelement auf, das ausgebildet ist, eine Temperaturwiderstandsfähigkeit des Raddrehzahlsensors so anzupassen, dass der Raddrehzahlsensor in einer Hochtemperaturumgebung einsatzfähig ist.

Der aktive Impulssensor ist ein Sensor, der Impulse erfasst, die durch eine Veränderung eines Magnetfelds in einem Erfassungsbereich des Sensors erzeugt werden. Die Veränderung des Magnetfelds im Bereich des Sensors erfolgt entweder durch Einbringen eines magnetischen Körpers, beispielsweise eines sich drehenden Polrads mit daran angebrachten Permanentmagneten, in den Erfassungsbereich oder durch Veränderung eines stationären Magnetfelds im Bereich des Sensors. Das stationäre Magnetfeld wird durch Einbringen eines ferromagnetischen Körpers in den Erfassungsbereich verändert. Hierbei wird ein Impulsrad, das am Umfang Zähne und Lücken aufweist, im Erfassungsbereich des Sensors bewegt und die Veränderung des Magnetfelds durch die sich durch den Erfassungsbereich bewegenden Zähne und Lücken erfasst. Dabei kann sowohl ein Übergang von einem Zahn zu einer Lücke als auch ein Übergang von einer Lücke zu einem Zahn erfasst werden.

Im Unterschied zum PKW-Bereich treten im Nutzfahrzeugbereich beim Abbremsen im Bereich der Radbremsen höhere Temperaturen auf, da eine wesentlich höhere kinetische Energie hauptsächlich in Wärmeenergie umgewandelt wird. Da die Raddrehzahlsensoren, wie auch die Radbremsen der Nutzfahrzeuge, im Bereich von Radnaben des Nutzfahrzeugs angeordnet sind, gibt es somit eine wesentlich größer ist. Hierbei liegen in der Hochtemperaturumgebung zwar keine dauerhaften hohen Temperaturen vor, jedoch sind auftretende Spitzentemperaturen, insbesondere beim starken Abbremsen, höher als im PKW-Bereich.

Durch den Einsatz von einem Bauelement, das ausgebildet ist, die Temperaturwiderstandsfähigkeit des Raddrehzahlsensors so anzupassen, dass der Raddrehzahlsensor in einer Hochtemperaturumgebung einsatzfähig ist, oder von mehreren solchen Bauelementen, können Raddrehzahlsensoren im Bereich der Radnaben, und damit in dem Bereich der Radbremsen, angeordnet sein, wobei eine Funktion und eine übliche Lebensdauer von Raddrehzahlsensoren mit aktiven Impulssensoren dennoch gewährleistet ist. Ferner können zusätzliche Funktionalitäten, wie etwa eine Erkennung der Drehrichtung eines der Räder, eine Messung eines Luftspalts zwischen dem Impulssensor und einem Polrad, eine Diagnosefunktionalität, wie etwa für magnetische Parameter, eine Signalübertragung mit einem Parity-Bit, etc., realisiert werden.

Erfindungsgemäß weist der Raddrehzahlsensor zwischen dem aktiven Impulssensor und einer Umgebung des Raddrehzahlsensors einen Bereich, der ein thermisches Isolationsmedium, das eine geringere Wärmeleitfähigkeit als eine Wärmeleitfähigkeit eines Materials des Gehäuses besitzt, als das Bauelement, um die Temperaturwiderstandsfähigkeit des Raddrehzahlsensors so anzupassen, dass der Raddrehzahlsensor in einer Hochtemperaturumgebung einsatzfähig ist, auf.

Durch diese Bereiche mit dem thermischen Isolationsmaterial, das eine geringere Wärmeleitfähigkeit als die Wärmeleitfähigkeit des Materials des Gehäuses hat, wird zwischen dem aktiven Impulssensor und der Umgebung Wärme langsamer zu wärmeempfindlichen Bauteilen geleitet und es können Bereiche, in denen wärmeempfindliche Bauteile angeordnet sind, wirksam gegen kurzzeitig auftretende übermäßige Temperaturen in der Hochtemperaturumgebung geschützt werden.

Gemäß einer weiteren vorteilhaften Weiterbildung des Raddrehzahlsensors weist der Raddrehzahlsensor einen abgeschlossenen Hohlraum auf, der ausgebildet ist, das thermische Isolationsmedium darin einzuschließen.

Ein abgeschlossener Hohlraum, der das thermische Isolationsmedium aufweist, kann einfach hergestellt werden und das thermische Isolationsmedium kann nach Bedarf einfach in den Hohlraum eingebracht werden.

Bei einer weiteren vorteilhaften Weiterbildung des Raddrehzahlsensors weist das thermische Isolationsmedium Luft auf.

Luft, beispielsweise Umgebungsluft in einer Montageumgebung, ist in einem vor einer endgültigen Montage des Raddrehzahlsensors offenen Hohlraum ohne weiteres Zutun vorhanden und ist somit ein günstiges thermisches Isolationsmedium, das ohne Mehraufwand verwendet werden kann.

In einer weiteren vorteilhaften Weiterbildung des Raddrehzahlsensors weist der Raddrehzahlsensor mehrere abgeschlossene Hohlräume auf.

Durch ein Vorsehen von mehreren abgeschlossenen Hohlräumen kann eine Isolationseigenschaft des Raddrehzahlsensors genauer festgelegt werden. Insbesondere bei der Verwendung von einem Gas, wie beispielsweise der Luft, als das thermische Isolationsmedium werden Isolationseigenschaften durch ein Verringern oder Beseitigen einer Konvektion weiter verbessert.

Gemäß einer weiteren vorteilhaften Weiterbildung des Raddrehzahlsensors sind die mehreren abgeschlossenen Hohlräume zueinander benachbart angeordnet.

Durch diese Anordnung kann eine Fläche eines Materials des Raddrehzahlsensors, das Wärme besser zu gefährdeten Bereichen leitet als das Isolationsmaterial, verringert werden, und so die Isolationswirkung verstärken.

In einer weiteren vorteilhaften Weiterbildung des Raddrehzahlsensors weisen die Hohlräume zumindest bereichsweise eine Bienenwaben-Struktur auf.

Durch die Bienenwabenstruktur, in der die mehreren Hohlräume nicht nur in einer Richtung, sondern in zwei Richtungen nebeneinander angeordnet sind und ein kleinstmöglicher Zwischenraum zwischen den Hohlräumen vorhanden ist, wird die Fläche des Materials des Raddrehzahlsensors, das Wärme besser zu gefährdeten Bereichen leitet, weiter verringert, um so die Isolationswirkung nochmals zu verstärken.

Bei einer weiteren vorteilhaften Weiterbildung des Raddrehzahlsensors weist der Raddrehzahlsensor den Hohlraum oder die Hohlräume zwischen einer Außenfläche des Gehäuses und einer Innenfläche der Schutzkappe auf.

Durch diese Anordnung des Hohlraums oder der Hohlräume ist der Hohlraum oder sind die Hohlräume einfach anzufertigen, da lediglich in die Außenfläche des Gehäuses oder in die Innenfläche der Schutzkappe Vertiefungen eingebracht werden müssen.

Gemäß einer vorteilhaften Weiterbildung des Raddrehzahlsensors weist der aktive Impulssensor einen AMR-Sensor als das Bauelement, um die Temperaturwiderstandsfähigkeit des Raddrehzahlsensors so anzupassen, dass der Raddrehzahlsensor in einer Hochtemperaturumgebung einsatzfähig ist, auf.

Ein AMR-Sensor, nämlich ein Sensor, der einen Chip mit einem "Anisotropen MagnetoResistiven" Effekt aufweist, weist eine große thermische Widerstandsfähigkeit auf. Damit kann der Raddrehzahlsensor auch ohne größere konstruktive Maßnahmen in der Hochtemperaturumgebung mit einer höheren thermischen Belastung eingesetzt werden.

Entsprechend einer vorteilhaften Weiterbildung des Raddrehzahlsensors ist der AMR-Sensor ausgebildet ist, eine Temperatur des Raddrehzahlsensors zu erfassen.

Bei der Verwendung des AMR-Sensors kann ohne zusätzliche Bauteile die Temperatur des Raddrehzahlsensors erfasst werden.

Nachstehend wird die Erfindung anhand eines Ausführungsbeispiels unter Bezugnahme auf die beigefügten Zeichnungen erläutert.

Insbesondere zeigt:
- Fig. 1: eine Aneinanderreihung von Komponenten des erfindungsgemäßen Raddrehzahlsensors;
- Fig. 2: eine vergrößerte Darstellung eines Ausschnitts einer Außenfläche eines zweiten Bauteils des Raddrehzahlsensors von Fig. 1;
- Fig. 3: eine Darstellung eines mit dem zweiten Bauteil umgossenen ersten Bauteils des Raddrehzahlsensors mit radialem Kabelabgang; und
- Fig. 4: eine Darstellung des Raddrehzahlsensors von Fig. 3 mit montierter Schutzkappe.

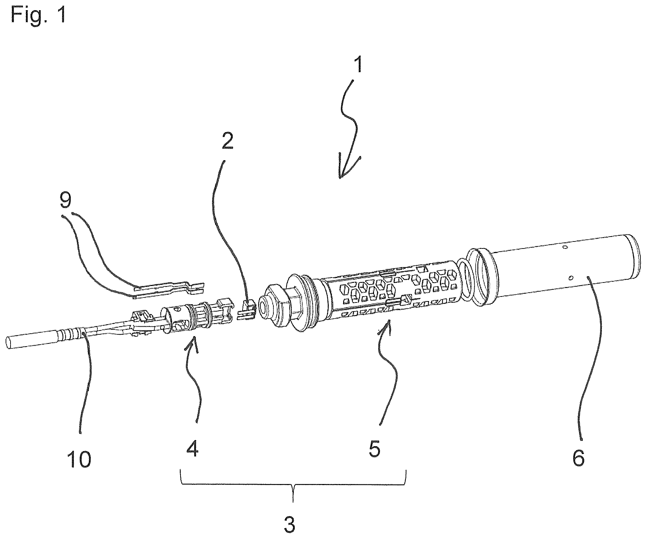

**Fig. 1** zeigt eine Aneinanderreihung von Komponenten des Raddrehzahlsensors 1 einer bevorzugten Ausführungsform der Erfindung. Der Raddrehzahlsensor 1 wird in einem nicht gezeigten Nutzfahrzeug eingesetzt. Alternativ kann der Raddrehzahlsensor 1 auch in anderen Fahrzeugen eingesetzt werden.

Der Raddrehzahlsensor 1 weist einen aktiven Impulssensor 2 und ein Gehäuse 3, das den aktiven Impulssensor 2 teilweise umschließt, auf.

Das Gehäuse 3 weist ein erstes Bauteil 4 aus Kunststoff und ein mit dem ersten Bauteil 4 verbundenes zweites Bauteil 5 aus dem gleichen Kunststoff auf. Ferner weist der Raddrehzahlsensor 1 eine Schutzkappe 6 auf, die das Gehäuse 3 teilweise abdeckt. In einer alternativen Ausführungsform wird das Gehäuse 3 des Raddrehzahlsensors 1 vollständig abgedeckt. In Fig. 1 sind diese Teile in einer nebeneinander angeordneten Darstellung gezeigt. Tatsächlich ist in der endgültigen Form das erste Bauteil 4 mit dem aktiven Impulssensor 2 von dem zweiten Bauteil 5 konzentrisch umschlossen. Die Herstellung geschieht wie folgt: Das erste Bauteil 4 mit vormontierten Elementen, nämlich dem aktiven Impulssensor 2, Stromschienen 9 und einem Anschlusskabel 10, wird mit demselben Kunststoff, aus dem das erste Bauteil 4 hergestellt wurde, umgossen, wodurch das zweite Bauteil 5 entsteht, das das erste Bauteil 4 quasi umhüllt. Wie in Fig. 1 am rechten Ende des ersten Bauteils 4 gezeigt ist, weist dieses eine Aussparung auf, um den aktiven Impulssensor 2 nicht vollständig abzudecken. Alternativ ist diese Aussparung nicht vorgesehen, und der aktive Impulssensor 2 ist von dem Gehäuse 3 vollständig umschlossen. In weiteren alternativen Ausführungsformen sind nicht sämtliche vormontierten Elemente vorgesehen, oder das erste Bauteil 4 wird alternativ nicht umgossen, sondern beispielsweise wird ein aus mehreren Teilen bestehendes zweites Bauteil 5 über das erste Bauteil 4 gestülpt und die Teile werden miteinander verbunden, beispielsweise geklipst. Alternativ wird nicht der gleiche Kunststoff verwendet.

Der Raddrehzahlsensor 1 weist zwischen dem aktiven Impulssensor 2 und einer Umgebung des Raddrehzahlsensors 1 einen Bereich mit einem thermischen Isolationsmaterial auf, das eine geringere Wärmeleitfähigkeit als eine Wärmeleitfähigkeit eines Materials des Gehäuses 3 hat, und bildet damit das Bauelement, mit dem die Temperaturwiderstandsfähigkeit des Raddrehzahlsensors so angepasst werden kann, dass der Raddrehzahlsensor in einer Hochtemperaturumgebung einsatzfähig ist.

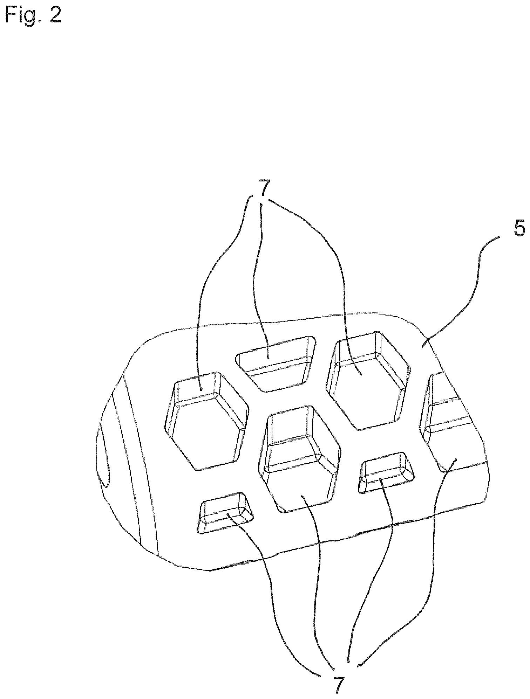

Der Bereich mit dem thermischen Isolationsmaterial weist, wie in **Fig. 2****,** einer vergrößerten Darstellung eines Ausschnitts einer Außenfläche des zweiten Bauteils 5 des Raddrehzahlsensors 1 von Fig. 1, genauer gezeigt ist, Vertiefungen 7 auf, die zwischen dem aktiven Impulssensor 2 und einer Umgebung des Raddrehzahlsensors 1 vorgesehen sind und nach außen hin offen sind.

Durch die Vertiefungen 7 werden, wenn die Schutzkappe 6 auf dem Gehäuse 3 montiert ist, mehrere Hohlräume zwischen der Außenfläche des zweiten Bauteils 5, also des Gehäuses 3, und einer Innenfläche der Schutzkappe 6 gebildet. Der Raddrehzahlsensor 1 weist dadurch mehrere abgeschlossene Hohlräume auf, die zueinander benachbart angeordnet sind. Insbesondere weist das Gehäuse 3 die Hohlräume in einer Bienenwaben-Struktur, in der die Hohlräume in zwei Richtungen nebeneinander angeordnet sind und ein kleinstmöglicher Zwischenraum zwischen den Hohlräumen vorhanden ist, auf.

In alternativen Ausführungsformen weist der Raddrehzahlsensor 1 nicht mehrere, sondern nur einen Hohlraum auf, der so ausgebildet ist, dass der aktive Impulssensor 3 von hohen Temperaturen so isoliert ist, dass die Temperaturwiderstandsfähigkeit des Raddrehzahlsensors 1 so angepasst ist, dass der Raddrehzahlsensor in einer Hochtemperaturumgebung einsatzfähig ist. In weiteren alternativen Ausführungsformen weist das Gehäuse 3 keine Bienenwaben-Struktur auf, oder die Hohlräume sind nicht zueinander benachbart angeordnet. In anderen alternativen Ausführungsformen sind die Hohlräume zwischen der Außenfläche des Gehäuses 3 und der Innenfläche der Schutzkappe 6 auch oder ausschließlich in der Schutzkappe 6, oder nicht zwischen der Außenfläche des Gehäuses 3 und der Innenfläche der Schutzkappe 6 angeordnet, sondern sind beispielsweise vollständig innerhalb des Materials der Schutzkappe 6 oder des zweiten Bauteils 5 des Gehäuses 3 vorgesehen.

In den Hohlräumen ist Luft als ein thermisches Isolationsmedium, das eine geringere Wärmeleitfähigkeit als eine Wärmeleitfähigkeit des Materials des Gehäuses 3, insbesondere des zweiten Bauteils 5, hat, eingeschlossen. In alternativen Ausführungsformen ist ein anderes Gas in den Hohlräumen eingeschlossen, oder Flüssigkeiten oder Feststoffe aus einem anderen Material als das des Gehäuses 3.

Der aktive Impulssensor 2 weist einen AMR-Sensor als das Bauelement, um die Temperaturwiderstandsfähigkeit des Raddrehzahlsensors so anzupassen, dass der Raddrehzahlsensor in einer Hochtemperaturumgebung einsatzfähig ist, auf.

Der AMR-Sensor ist ausgebildet, zusätzliche Funktionalitäten, nämlich eine Erkennung der Drehrichtung eines der Räder, eine Messung eines Luftspalts zwischen dem Impulssensor und einem Polrad, eine Diagnosefunktionalität, wie etwa für magnetische Parameter, eine Signalübertragung mit einem Parity-Bit, und eine Erfassung einer Temperatur des Raddrehzahlsensors, auszuführen. In alternativen Ausführungsformen wird nur eine oder werden lediglich einige der Funktionalitäten ausgeführt.

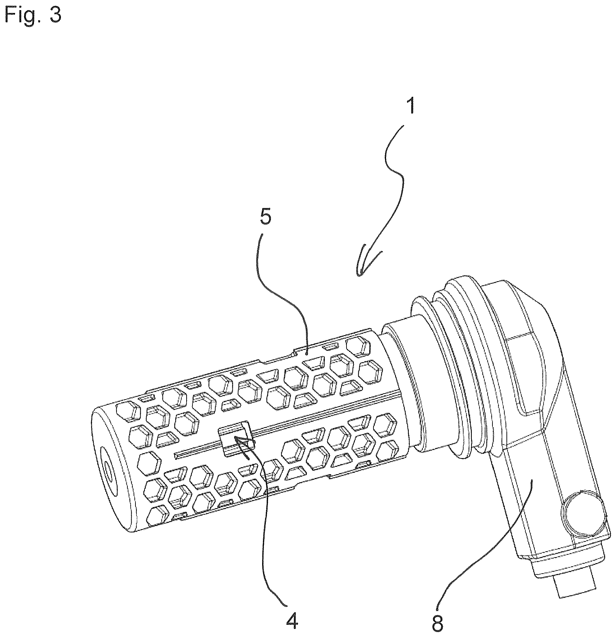

**Fig. 3** zeigt eine Darstellung des mit dem zweiten Bauteil 5 umgossenen ersten Bauteils 4 des Raddrehzahlsensors 1 mit radialem Kabelabgang 8.

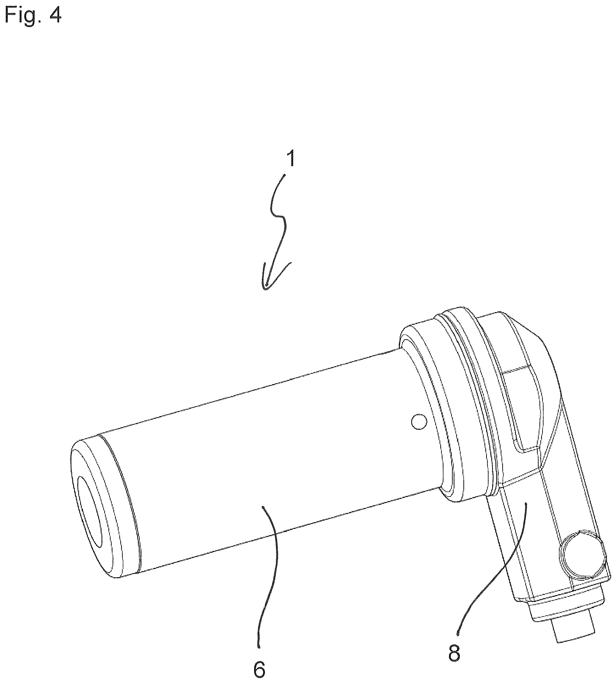

**Fig. 4** zeigt eine Darstellung des Raddrehzahlsensors 1 mit radialem Kabelabgang mit montierter Schutzkappe 6.

Weiterhin weist ein Nutzfahrzeug den Raddrehzahlsensor 1 auf. Durch das Vorsehen des Raddrehzahlsensors 1 mit dem aktiven Impulssensor und dem Bauelement, das die Temperaturwiderstandsfähigkeit des Raddrehzahlsensors so anpasst, dass der Raddrehzahlsensor in der Hochtemperaturumgebung einsatzfähig ist, können die zusätzlichen Funktionalitäten des aktiven Impulssensors im Nutzfahrzeugbereich genutzt werden.

Alle in der Beschreibung, den nachfolgenden Ansprüchen und der Zeichnung dargestellten Merkmale können sowohl einzeln als auch in beliebiger Kombination miteinander erfindungswesentlich sein

### BEZUGSZEICHENLISTE

- 1: Raddrehzahlsensor
- 2: aktiver Impulssensor
- 3: Gehäuse
- 4: erstes Bauteil
- 5: zweites Bauteil
- 6: Schutzkappe
- 7: Vertiefung
- 8: radialer Kabelabgang
- 9: Stromschiene
- 10: Anschlusskabel

## Patentansprüche

1. Raddrehzahlsensor (1) für ein Nutzfahrzeug, aufweisend
einen aktiven Impulssensor (2),
ein Gehäuse (3), das ausgebildet ist, den aktiven Impulssensor (2) zumindest teilweise zu umschließen, und
eine Schutzkappe (6), die das Gehäuse (3) zumindest teilweise abdeckt,
**dadurch gekennzeichnet, dass**
der Raddrehzahlsensor (1) mindestens ein Bauelement aufweist, das ausgebildet ist, eine Temperaturwiderstandsfähigkeit des Raddrehzahlsensors so anzupassen, dass der Raddrehzahlsensor in einer Hochtemperaturumgebung einsatzfähig ist,
wobei
der Raddrehzahlsensor (1) zwischen dem aktiven Impulssensor (2) und einer Umgebung des Raddrehzahlsensors (1) einen Bereich, der ein thermisches Isolationsmedium aufweist, das eine geringere Wärmeleitfähigkeit als eine Wärmeleitfähigkeit eines Materials des Gehäuses (3) besitzt, als das Bauelement aufweist, um die Temperaturwiderstandsfähigkeit des Raddrehzahlsensors so anzupassen, dass der Raddrehzahlsensor in einer Hochtemperaturumgebung einsatzfähig ist,.

2. Raddrehzahlsensor (1) gemäß Anspruch 1, wobei
der Raddrehzahlsensor (1) einen abgeschlossenen Hohlraum aufweist, der ausgebildet ist, das thermische Isolationsmedium darin einzuschließen.

3. Raddrehzahlsensor gemäß Anspruch 2, wobei
das thermische Isolationsmedium Luft aufweist.

4. Raddrehzahlsensor (1) gemäß Anspruch 2 oder 3, wobei
der Raddrehzahlsensor (1) mehrere abgeschlossene Hohlräume aufweist.

5. Raddrehzahlsensor (1) gemäß Anspruch 4, wobei die mehreren abgeschlossenen Hohlräume zueinander benachbart angeordnet sind.

6. Raddrehzahlsensor (1) gemäß Anspruch 5, wobei
die Hohlräume zumindest bereichsweise eine Bienenwaben-Struktur aufweisen.

7. Raddrehzahlsensor (1) gemäß einem der Ansprüche 2 bis 6, wobei
der Hohlraum oder die Hohlräume zwischen einer Außenfläche des Gehäuses (3) und einer Innenfläche der Schutzkappe (6) vorgesehen sind.

8. Raddrehzahlsensor (1) gemäß einem der vorangehenden Ansprüche, wobei
der aktive Impulssensor (2) einen AMR-Sensor als das Bauelement, um die Temperaturwiderstandsfähigkeit des Raddrehzahlsensors so anzupassen, dass der Raddrehzahlsensor in einer Hochtemperaturumgebung einsatzfähig ist, aufweist.

9. Raddrehzahlsensor (1) gemäß Anspruch 8, wobei
der AMR-Sensor ausgebildet ist, eine Temperatur des Raddrehzahlsensors (1) zu erfassen.

## Claims

1. Wheel speed sensor (1) for a utility vehicle, having
an active pulse sensor (2),
a housing (3), which is designed to at least partially enclose the active pulse sensor (2), and
a protective cap (6), which at least partially covers the housing (3),
**characterized in that**
the wheel speed sensor (1) has at least one component, which is designed to adapt a temperature resistance capability of the wheel speed sensors so that the wheel speed sensor is usable in a high temperature environment,
wherein
the wheel speed sensor (1) has a region between the active pulse sensor (2) and an environment of the wheel speed sensor (1), which region has a thermal insulation medium that has a lower thermal conductivity than a thermal conductivity of a material of the housing (3), as the component in order to adapt the temperature resistance capability of the wheel speed sensor so that the wheel speed sensor is usable in a high temperature environment.

2. Wheel speed sensor (1) according to Claim 1, wherein
the wheel speed sensor (1) has a closed cavity, which is designed to enclose the thermal insulation medium therein.

3. Wheel speed sensor according to Claim 2, wherein
the thermal insulation medium comprises air.

4. Wheel speed sensor (1) according to Claim 2 or 3, wherein
the wheel speed sensor (1) has multiple closed cavities.

5. Wheel speed sensor (1) according to Claim 4, wherein the multiple closed cavities are arranged adjacent to one another.

6. Wheel speed sensor (1) according to Claim 5, wherein
the cavities have a honeycomb structure at least in regions.

7. Wheel speed sensor (1) according to any one of Claims 2 to 6, wherein
the cavity is or the cavities are provided between an outer surface of the housing (3) and an inner surface of the protective cap (6).

8. Wheel speed sensor (1) according to any one of the preceding claims, wherein
the active pulse sensor (2) has an AMR sensor as the component to adapt the temperature resistance capability of the wheel speed sensor so that the wheel speed sensor is usable in a high temperature environment.

9. Wheel speed sensor (1) according to Claim 8, wherein
the AMR sensor is designed to detect a temperature of the wheel speed sensor (1)

## Revendications

1. Capteur (1) de la vitesse de rotation d'une roue d'un véhicule utilitaire, comportant
un capteur (2) actif d'impulsion,
un boîtier (3), qui est constitué pour enfermer, au moins en partie, le capteur (2) actif d'impulsion, et
une coiffe (6) de protection, qui recouvre le boîtier (3) au moins en partie,
**caractérisé en ce que**
le capteur (1) de la vitesse de rotation d'une roue a au moins un composant, qui est constitué pour adapter une aptitude à résister à la température du capteur de la vitesse de rotation d'une roue, de manière à ce que le capteur de la vitesse de rotation d'une roue puisse être utilisé dans un environnement à haute température,
dans lequel
le capteur (1) de la vitesse de rotation d'une roue a, entre le capteur (2) actif d'impulsion et un environnement du capteur (1) de la vitesse de rotation d'une roue, une partie, qui a un milieu d'isolation thermique, possédant une conductibilité de la chaleur plus petite qu'une conductibilité de la chaleur d'un matériau du boîtier (3), comme composant, pour adapter l'aptitude à résister à la température du capteur de la vitesse de rotation d'une roue, de manière à pouvoir utiliser le capteur de la vitesse d'une rotation d'une roue dans un environnement à haute température.

2. Capteur (1) de la vitesse de rotation d'une roue suivant la revendication 1, dans lequel
le capteur (1) de la vitesse de rotation d'une roue a une cavité fermée, qui est constituée pour y enfermer le milieu d'isolation thermique.

3. Capteur de la vitesse de rotation d'une roue suivant la revendication 2, dans lequel
le milieu d'isolation thermique comporte de l'air.

4. Capteur (1) de la vitesse de rotation d'une roue suivant la revendication 2 ou 3, dans lequel
le capteur (1) de la vitesse de rotation d'une roue a plusieurs cavités fermées.

5. Capteur (1) de la vitesse de rotation d'une roue suivant la revendication 4, dans lequel
les plusieurs cavités fermées sont disposées au voisinage les unes des autres.

6. Capteur (1) de la vitesse de rotation d'une roue suivant la revendication 5, dans lequel
les cavités ont au moins par endroits une structure en nid d'abeille.

7. Capteur (1) de la vitesse de rotation d'une roue suivant l'une des revendications 2 à 6, dans lequel
la cavité ou les cavités sont prévues entre une surface extérieure du boîtier (3) et une surface intérieure de la coiffe (6) de protection.

8. Capteur (1) de la vitesse de rotation d'une roue suivant l'une des revendications précédentes, dans lequel
le capteur (2) actif d'impulsion a un capteur AMR, comme composant pour adapter l'aptitude à résister à la température du capteur de la vitesse de rotation d'une roue, de manière à ce que le capteur de la vitesse de rotation d'une roue puisse être utilisé dans un environnement à haute température.

9. Capteur (1) de la vitesse de rotation d'une roue suivant la revendication 8, dans lequel
le capteur AMR est constitué pour détecter une température du capteur (1) de la vitesse de rotation d'une roue.
